# EUROPÄISCHE PATENTSCHRIFT

(11) **EP 0 967 326 B1**
(45) Veröffentlichungstag und Bekanntmachung des Hinweises auf die Patenterteilung: **13.12.2006**
(21) Anmeldenummer: 99111818.3
(22) Anmeldetag: 18.06.1999
(51) Int. Cl.: D21G 9/00

(54) **Verfahren zur Prozessführung und Prozessoptimierung bei der Herstellung von Fasermatten und/oder Faserplatten**
Method for conducting and optimising a process in the production of fibre mats and/or boards
Procédé pour conduire et optimaliser un processus lors de la fabrication de nappes et/ou plaques de fibres

(30) Priorität: 22.06.1998 DE 19827527
(43) Veröffentlichungstag der Anmeldung: 29.12.1999
(73) Patentinhaber: SIEMENS AKTIENGESELLSCHAFT, 80333 München (DE)
(72) Erfinder: Hollatz, Jürgen, Dr., 81479 München (DE); Jünnemann, Erwin, 91056 Erlangen (DE); Bunic, Valentino, Dipl.-Ing.(FH), 72555 Metzingen (DE); Kessler, Rudolf, Prof. Dr., 72762 Reutlingen (DE); Kessler, Waltraud, Dipl.-Phys., 72762 Reutlingen (DE); Quint, Bodo, Dipl.-Ing.(FH), 72108 Rottenburg (DE)

(56) Entgegenhaltungen:
- WO-A-96/29468
- WO-A1-95/31710
- WO-A1-97/04299
- DE-A- 19 510 008

## Beschreibung

Die Erfindung bezieht sich auf ein Verfahren zur Prozeßführung und Prozeßoptimierung bei der Herstellung von Fasermatten und/oder Faserplatten aus nachwachsenden, holzartigen und/oder lignozellulosischen Rohstoffen, wobei Hackschnitzel aus den Rohstoffen zu Faserstoffen aufbereitet und anschließend zu Matten geformt, und wobei die Matten getrocknet und/ oder in einer Preßmaschine verpreßt werden.

Die klassische Methode der Herstellung von Holzfaserplatten ohne chemischen Binder ist der Naßprozeß. Im Gegensatz zu den heute weit verbreiteten Trockenprozessen erlaubt der Naßprozeß die Nutzung der natürlichen Bindemittel des Holzstoffes, der aus Einjahrespflanzen gewonnen werden kann, wie Lignin, Hemicellulosen und Celluloseabbauprodukte, so daß zum Teil ganz auf zusätzliche Bindemittel oder Zuschlagstoffe verzichtet werden kann.

Das Ziel einer modernen Produktionstechnik ist die Herstellung von maßgeschneiderten Produkten auf möglichst ökonomischer und ökologischer Basis. Dabei muß auf wechselnde Rohstoffqualitäten der Naturstoffe ebenso eingegangen werden wie auf wechselnde Anforderungsprofile des Anwenders. Dies bedarf eines komplizierten Regelwerkes, das direkt im Betrieb die Qualität der Produktion online überwacht und steuernd eingreifen kann. Nur so läßt sich eine über Jahre hinaus gleichbleibende Qualität garantieren.

Nachteil bei der Verwendung natürlicher Rohstoffe ist die unterschiedliche Rohstoffqualität, die vom Standort und den klimatischen Bedingungen während des Wachstums abhängt. Rohstoffkenngrößen sind z.B. die Art des Holzes, beispielsweise Unterteilung nach Hart- oder Weichholz, Einjahrespflanzen od. dgl., die Mischungskonzentrationen der Holzstoffe einschließlich der Beimengung an Rinde, sowie insbesondere das Alter von Holz. Diese Parameter bezeichnet man als Rohstoffkenngrößen.

Die Qualität des Endproduktes bei der Herstellung von Hartfaserplatten definiert sich über technologische Kenngrößen wie z.B. Biegefestigkeit, Zugfestigkeit, Berstfestigkeit, Moduln etc. Diese Kenngrößen werden vorzugsweise durch den morphologischen Aufbau beim Holz und der daraus resultierenden Fasern, sowie in überwiegendem Maße durch die Aktivierung der im Holz befindlichen Klebestoffe bzw. Bindemittel bestimmt, wie z.B. Lignin, Hemicellulose und Zuckerstoffe. Dazu kommen noch Eigenschaften, die überwiegend nur durch die chemische Zusammensetzung von Holz vor und nach dem Aufschluß bestimmt werden, wie z.B. die Wasseraufnahme und das Quellvermögen einer Fasermatte bzw. -platte. Die Fasermatte als Endprodukt ist durch ihre Flexibilität, eine Faserplatte als Endprodukt durch die Festigkeitseigenschaften und Formgebung bestimmt. Die technologischen Kenngrößen der Endprodukte werden auch Zielgrößen genannt.

Vom Stand der Technik sind beispielsweise aus der DE 195 10 008 A1 ein Verfahren und eine Vorrichtung zur Prozeßführung bei der Zellstoff- und Papierherstellung bekannt, bei denen durch Erfassung von spektralen Kennwerten bei diskreten Wellenlängen im Rahmen optischer Methoden Hilfsgrößen, insbesondere die Eigenschaften der im Prozess verwendeten Stoffe zur Erstellung von Modellen abgeleitet werden, die als Grundlage zur Generierung von Steuer- und Regelgrößen dienen.

Aus der WO 96/29468 A1 geht ein weiteres Verfahren zur Prozessführung einer Papiermaschine hervor, bei welchem spektrale Kennwerte an den im Prozess verwendeten Stoffen gewonnen werden, um Steuer- und Regelgrößen abzuleiten.

Weiterhin ist aus der WO 97/04299 A1 die Vorhersage von Eigenschaften von Faserplatten bekannt, wobei spektroskopische Methoden eingesetzt werden, allerdings nur bei Feuchtegehalten von < 10 %. In der WO 95/31710 A1 werden spektroskopische Methoden zur Anwendung bei unterschiedlichen Holzsorten beschrieben, mit denen Qualitätsparameter des Holzes ermittelt werden. Aus der WO 98/28 486 A1 ist es bekannt, speziell zur Prozeßoptimierung von Refinern kontinuierliche Spektren aufzunehmen, daraus Kenngrößen abzuleiten und über eine diesbezügliche Modellbildung die geeigneten Regelgrößen zur Prozeßoptimierung bei der laufenden Fertigung zu ermitteln.

Ausgehend von obigem Stand der Technik ist es Aufgabe der Erfindung, ein Verfahren anzugeben, mit dem die Herstellung von Fasermatten bzw. Faserplatten verbessert wird.

Die Aufgabe ist erfindungsgemäß bei dem Verfahren der eingangs genannten Art durch die Merkmale des Patentanspruches 1 gelöst. Weiterbildungen sind in den Unteransprüchen angegeben.

Der Erfindung liegt die Erkenntnis zugrunde, daß optische und spektroskopische Methoden durch Partitionierung in selektierten Bereichen es erlauben, sowohl die morphologischen als auch chemischen Kenngrößen eines Materials sowohl im trockenen als auch im feuchten und nassen Zustand zu bestimmen. Erstere werden z.B. über die Streueigenschaften, letztere z.B. über die Absorption von elektromagnetischer Strahlung erfaßt. Somit ist eine schnelle und berührungslose online-Kontrolle bei der Herstellung von Fasermatten bzw. Faserplatten möglich.

Im Rahmen des angegebenen Verfahrens müssen aufgrund der Messung an Festkörpern oder Festkörperoberflächen besondere Probleme mitberücksichtigt werden: Zum einen soll das Meßsystem bei der Signalaufnahme sowohl von trockenen als auch nassen Systemen ohne Probleme arbeiten. Zum anderen müssen auch rauhe, gebogene oder wie im Falle bei Holzhackschnitzeln auch heterogenes Stückgut ohne weitere Vorbereitung der Probe analysiert werden können. Demzufolge ist es erforderlich, reproduzierbare Informationen auch dann zu erhalten, wenn das Stückgut außerhalb des Focus des Instrumentes ist, oder die makroskopische Oberfläche der Probe nicht reproduzierbar mit dem Spektrometer erfaßt werden kann, z.B. bei grobem Schüttgut. Dies wird mit dem erfindungsgemäßen Verfahren und der zugehörigen Vorrichtung dadurch erreicht, daß die optischen Messungen in unterschiedlichen Moden durchgeführt wird. Durch gleichzeitige Messung von spekularer, d.h. gerichteter, Strahlung und diffuser, d.h. ungerichteter, Strahlung ergibt sich im Spektrometer eine eindeutige Differenzierung der Meßgrößen.

Um eine 100 %-Kontrolle mit einer "feed back"- Analyse und mit einer "feed forward"-Strategie realisieren zu können, geht man bei der Erfindung in folgenden Schritten vor:
- Im ersten Schritt werden die möglichen Rohstoff und Prozeßvariablen aufgelistet und mit Hilfe eines statistischen Versuchsplanes experimentell die Einflüsse der Rohstoff- und Prozeßbedingungen quantitativ ermittelt. Die genaue Vorgehensweise wird an anderer Stelle mit gleicher Anmeldepriorität im Zusammenhang mit der Herstellung von maßgeschneiderten Faserplatten beschrieben. Im vorliegenden Fall dienen Proben als Basis zur Kalibrierung der spektroskopischen Messungen. Vorteil dieses Vorgehens ist es, daß nunmehr alle möglichen, d.h. auch die ungünstigen Verfahrensbedingungen mit erfaßt werden.
- Im zweiten Schritt werden die Proben im spektralen Bereich des UV/VIS/NIR und IR-Bereiches (ca. 0,2 µm bis 40 µm), möglichst in diffuser und gerichteter Reflexion, vermessen. Die Spektren werden dann in der Weise ausgewertet, daß redundante Informationen oder Nicht-Informationen bzw. Artefakte eliminiert werden. Dies gelingt durch eine sogenannte Partitionierung der Spektren. Diese "spektrale Partitionierung" führt zu Spektren, welche nur noch die für das zu lösende Problem relevante Information beinhaltet. Mit Hilfe der multivariaten Datenanalyse kann dann anschließend die Information weiter verdichtet werden.
- Im dritten Schritt wird auf Grund der Ergebnisse des vorausgehenden Schrittes derjenige Wellenlängenbereich ausgewählt, der am aussichtsreichsten sowohl die Rohstoffkenngrößen als auch die Prozeßkenngrößen beschreibt. Daraus läßt sich ein auf die jeweilige Problemstellung adaptiertes Spektrometer konstruieren ("optische Partitionierung"), wobei zu beachten ist, daß die Meßtechnik auch variierende äußere Einflüsse wie Feuchtigkeit, Nässe oder "out of focus"-Einstellungen, die als sog. "Flatteramplitude" bezeichnet werden, toleriert. Damit wird eine direkte Messung von Fasern oder Hackgut ohne weitere Probenvorbereitung möglich.

Aus der Literatur sind zwar Hinweise auf eine mögliche Prozeßsteuerung mit Hilfe spektroskopischer Methoden bekannt. In den meisten Fällen werden dort aber Lösungen vorgeschlagen, die lediglich im Labor realisiert werden können, sich jedoch in einer industriellen Umgebung nicht bewähren bzw. bisher nicht bewährt haben.

Überraschend beim erfindungsgemäßen Vorgehen ist, daß auf einfache Weise durch den ersten Schritt spezifische Materialprofile erhalten werden, die sich ideal als Kalibrierset eignen. Durch diesen Schritt ist gewährleistet, daß alle möglichen Kombinationen während der Prozeßführung in der Kalibrierung berücksichtigt werden können.

Die überwiegende Mehrzahl der bekannten Untersuchungen verwendet Wellenlängen im InfraRot (IR) oder im Nahen InfraRot (NIR), dort speziell im Bereich 1000 nm bis 2500 nm, für spektroskopische Messungen zur Charakterisierung. In der Regel wird dabei der gesamte gemessene Spektralbereich in die Auswertung mit einbezogen, so daß es vorkommen kann, daß überwiegend nicht relevante Information mit in die Kalibrierung integriert wird. Überraschend beim erfindungsgemäßen Vorgehen ist jedoch weiterhin, daß sich durch eine vorgeschaltete Partitionierung der Spektren die Aussagekraft erheblich steigern läßt und sich insbesondere auch im UV/VIS-Bereich, d.h. 200 bis 700 nm, bzw. dem kurzwelligen NIR-Bereich, d.h. 700 nm bis 1200 nm, sowohl der Rohstoff "Holz" als auch die Faserstoffe nach der Verarbeitung eindeutig bestimmen lassen. Vorteilhaft ist dabei nicht nur, daß ohne Probleme auch feuchte und nasse Proben im UV/VIS-Bereich ohne Störung durch die Wasserbande analysiert, sondern daß für die Meßtechnik auch gleichzeitig Kosten eingespart werden, durch die Verwendung von billigen Halogenlampen als Lichtquellen sowie z.B. neben Gitterspektrometern oder Filterspektrometern auch Diodenarrayspektrometer auf Basis von Si-Chips.

Unbefriedigend blieben bisher die Vorschläge, Hackschnitzel im Haufen zuverlässig zu untersuchen, ohne daß eine Probenvorbereitung notwendig ist. Bei Festkörpern wird der spektrale Verlauf der Reflexion durch die Überlagerung von spekularer, d.h. gerichteter, und diffuser, d.h. gestreuter, Reflexion beeinflußt. Beim Stand der Technik wird vorausgesetzt, daß die zu untersuchenden Proben immer die gleiche Oberflächenstruktur aufweisen und immer mit konstanten Einfallswinkeln bei der Beleuchtung und mit definierten Beobachtungswinkeln analysiert werden. Im Rahmen der Erfindung ergab sich überraschenderweise durch beigefügte Konstruktion des Spektrometers nunmehr die Erkenntnis, daß durch geeignete Wahl der geometrischen Bedingungen auch sog. Flatteramplituden, d.h. Amplituden von 0 bis weit über 10 cm realisiert werden können. Damit lassen sich also Proben mit erheblichen Unebenheiten in den Oberflächen, z.B. Schuttgüter wie stückige Hackschnitzel, ohne weitere Probenvorbereitung vermessen.

Eine komplexe Produktionstechnik für die Herstellung von hochwertigen Qualitätsprodukten ist nur dann möglich, wenn der Prozeß über Prozeßleitsysteme kontrolliert gefahren wird. Wichtig ist dabei, daß sowohl eine "feed back"- Kontrolle als auch eine "feed forward"- Kontrolle in jedem Prozeßschritt integriert wird. Beides ist im Rahmen der Erfindung möglich. Wesentlich ist dabei, alle Rohstoff- und Prozeßparameter online zu messen, zu kontrollieren und mit den festgelegten Daten zu vergleichen. Gleichzeitig erlaubt diese Strategie, die zu erwartenden Zielgrößen vorauszuberechnen, so daß während des Produktionsprozesses gegebenenfalls alle Folgeschritte entsprechend dem definierten Anforderungsprofil angepaßt werden können, um die Qualität konstant zu halten.

Vorteilhafterweise wird zusätzlich kontrolliert, ob die erforderliche Qualität auch tatsächlich produziert worden ist. Durch die Erfindung werden dazu alle Rohstoffkenngrößen sowie die tatsächlich realisierten Prozeßkenngrößen aus dem hergestellten Faserstoff herausgelesen und das zu erwartende Eigenschaftsprofil vorhergesagt.

Im Rahmen der Erfindung wird speziell für einen Refiner ausgenutzt, daß die optischen und spektroskopischen Methoden es erlauben, neben der Auswahl eines geeigneten Rohstoffes mit Hilfe der Prozeßvariablen Temperatur und Zeit der Sattdampfbehandlung, sowie durch die mechanischen Prozeßvariablen Plattenabstand und relative Geschwindigkeit der Rotoren und Statoren, die Qualität der Produkte beeinflussen. Die Prozeßvariablen "Druck", die der Sattdampftemperatur entspricht, und "Zeit" können als sog. "Severity factor" (SFC) zusammengefaßt werden.

Weitere Einzelheiten und Vorteile der Erfindung ergeben sich aus der nachfolgenden Figurenbeschreibung von Ausführungsbeispielen anhand der Zeichnung in Verbindung mit weiteren Unteransprüchen. Es zeigen
- Figur 1: ein Ablaufschema für die Herstellung von Fasermatten bzw. Faserplatten mit einzelnen Meßstellen,
- Figur 2: eine Darstellung der erfindungsgemäßen Vorgehensweise,
- Figur 3: ein Diagramm zur generellen Abhängigkeit von mechanischen Produkteigenschaften vom sog. Severity-Faktor,
- Figur 4: ein spezifisches Diagramm gemäß Figur 3 für unterschiedliche Holzsorten,
- Figur 5: ein Diagramm zur generellen Abhängigkeit von chemischen Produkteigenschaften vom sog. Severity-Faktor,
- Figur 6: ein spezifisches Diagramm gemäß Figur 5 für unterschiedliche Holzsorten,
- Figur 7 und 8: Spektren von Fichte im Bereich des UV-/VIS,
- Figur 9: die Variation der Holzart bzw. Holzmischung während der Produktion von Faserplatten,
- Figur 10: die Übergangszeit in Abhängigkeit von einer Holzsorte zur anderen Holzsorte,
- Figur: 11 eine Darstellung zur Korrelation zwischen Mahlgrad und UV-Score,
- Figur 12: den Verlauf von UV/VIS-Spektren bei verschiedenen Holzstoffen mit unterschiedlicher Feinheit, d.h. Mahlgrad, und
- Figur 13: eine Darstellung der Erfassung von optischen Responsesignalen mit sogenannter Flatteramplitude.

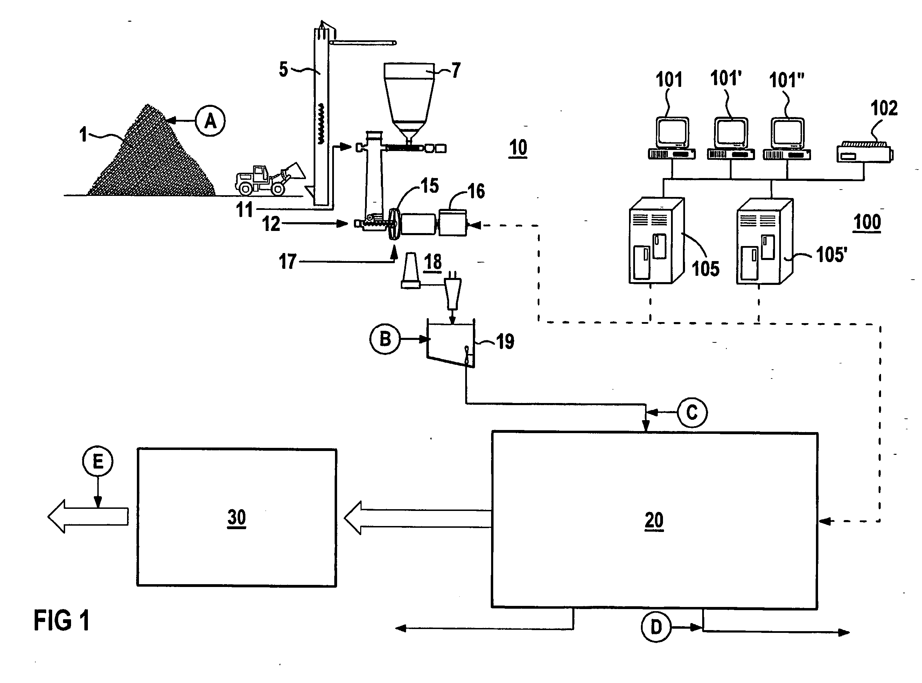

Figur 1 zeigt das "Flow Sheet" des Naßprozesses zur Faserplattenherstellung mit den einzelnen Arbeitsschritten.

Im einzelnen ist eine Anlage zur Herstellung von Fasermatten dargestellt, die im wesentlichen aus einem Refiner 10 mit entsprechender Peripherie, einer Entwässerungsanlage 20 und der zugehörigen Prozeßsteuer- und Regeleinheit 100 mit Leitsystem, PC und anderen Automatisierungseinheiten besteht.

Vor dem eigentlichen Refiner 10, der in üblicher Weise eine Vorrichtung zum Mahlen bzw. Zerfasern von Holzhackschnitzeln aufweist, ist eine Anlage zur Aufbereitung von Holz oder entsprechender, schnellwachsender holzartiger Gewächse (Einjahrespflanzen) vorhanden. Hier werden im einzelnen Hackschnitzel 1 erzeugt, die über eine Förderanlage 5 und einen Trichter 7 unter Zusatz von Dampf und weiterer chemischer Zusatzstoffe einem Mahlprozeß zugeführt werden. Dazu weist der Refiner 10 einzelne Zuführungen 11, 12 auf.

Der Refiner 10 beinhaltet eine Mahlanlage, die aus einem Mahlwerk 15 und zugehörigem Antrieb 16 besteht, wobei die Betriebsparameter der Mahlanlage wie Spalt, Drehzahl und dgl. veränderbar sind. In der Mahlanlage werden die Holzhackschnitzel zu Fasern umgewandelt, wobei gleichermaßen ein chemischer Aufschluß zur Herauslösung des Lignins vorgenommen wird. In zwei Stationen 18 können die Fasern von Begleitstoffen getrennt werden. In einer Bütte 19 erhält man Faserstoff als Zwischenprodukt.

Die so hergestellten Fasern können zu Matten geformt werden, die entweder in einer Entwässerungsanlage 20 unmittelbar getrocknet und als Produkt fertiggestellt sind oder die nach Entwässerung weiter zu Platten verpreßt werden. Dazu ist eine Preßanlage 30 aus einzelnen Preßeinrichtungen aufgebaut, wobei in einem mehrstufigen Vorgang die Matten zu Platten verdichtet und verpreßt werden. Das Prozeßwasser wird dabei gesammelt, gegebenenfalls in den Prozeß zurückgeführt unter Ausbringung eines Teils als Abwasser.

Der gesamten Anlage sind Prozeßleitsysteme zugeordnet, die pauschal mit 100 bezeichnet sind und beispielhaft aus Einheiten 105, 105' zur Prozeßautomatisierung und zugeordneten Rechnern 101, 101', 101'' besteht.

Ziel ist es, die Prozeßführung zu optimieren. Dazu sind an signifikanten Punkten der Anlage Spektrometer zur Erfassung spezifischer Spektren vorhanden, aus denen jeweils Kenngrößen zur Verwendung beim Leitsystem 100 abgeleitet werden. Beispielsweise wird ein Spektrum A an den Hackschitzeln, ein Spektrum B am Refinerstoff, ein Spektrum C an der Entwässerungsmaschine 20, ein Spektrum D am Abwasser und ein Spektrum E am fertigen Produkt, d.h. an der Fasermatte oder an der Faserplatte aufgenommen.

Es ergeben sich,Beispiele für unterschiedliche Anforderungsprofile von Faserplatten bei bestimmungsgemäßem Gebrauch.

Zur Erzielung gleichbleibender Produktqualitäten müssen die empirisch gefundenen Mischungsverhältnisse und Produktionsbedingungen, wegen der sehr großen Variabilität der natürlichen Rohstoffe, sehr robust, d.h. auch gegen stärkere Schwankungen unempfindlich sein. Dies bedeutet aber, daß mit der heutigen Praxis die theoretisch möglichen Eigenschaften der Produkte nicht erreicht werden, daß aber auch der Produktionsprozeß nicht unter den jeweils optimalen Bedingungen geführt werden kann.

Wünschenswert ist, wenn man einerseits Fasern und Faserplatten mit noch unterschiedlicheren Eigenschaftsprofilen gezielt ("tailor made" = maßgeschneidert) herstellen könnte, bzw. wenn man andererseits, möglichst schon vor der eigentlichen Produktion, aus vorhandenen Datensätzen die dafür im einzelnen notwendigen und günstigsten Produktionsbedingungen vorausberechnen könnte. Da für die Lösung dieses Problemes die Optimierung eines vieldimensionalen Raumes erforderlich ist, stößt man mit normalen "Trial and Error"-Methoden oder empirischen Ansätzen schnell an Grenzen.

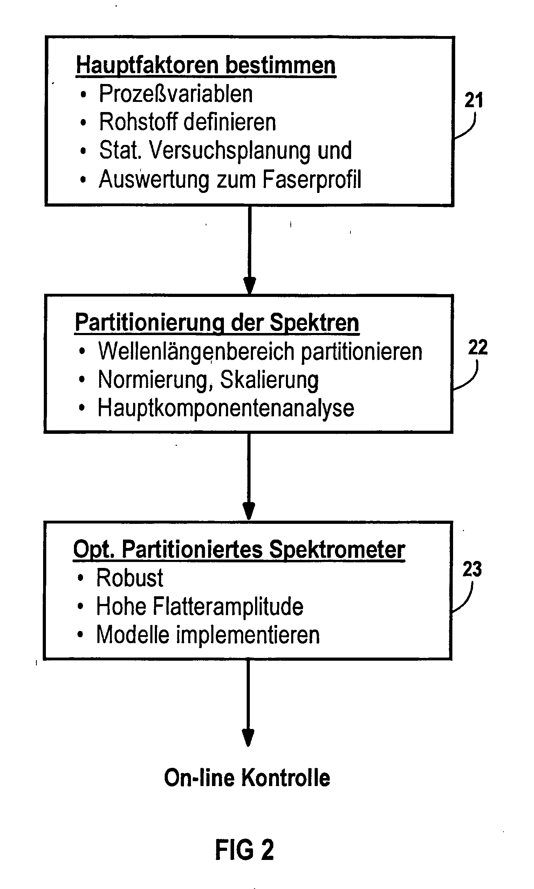

Figur 2 zeigt ein Ablaufdiagramm des erfindungsgemäßen Vorgehens: Es wird in drei Schritten 21, 22 und 23 vorgegangen, womit eine Online-Kontrolle angestrebt wird:

Im Schritt 21 werden die möglichen Rohstoff und Prozeßvariablen aufgelistet und mit Hilfe eines statistischen Versuchsplanes experimentell die Einflüsse der Rohstoff- und Prozeßbedingungen quantitativ ermittelt. Die genaue Vorgehensweise ist ausführlich in einer Parallelanmeldung zur Herstellung von maßgeschneiderten Faserplatten beschrieben. Im vorliegenden Falle dienen die Proben als Basis zur Kalibrierung der spektroskopischen Messungen. Vorteil dieses Vorgehens ist es, daß hierbei alle möglichen, auch ungünstigen Verfahrensbedingungen mit erfaßt werden.

Im Schritt 22 werden die Proben im spektralen Bereich des UV/VIS/NIR und IR-Bereiches (ca. 0,2 µm bis 40 µm), möglichst in diffuser und gerichteter Reflexion, vermessen. Die Spektren werden dann in der Weise ausgewertet, daß redundante Informationen oder Nicht-Informationen bzw. Artefakte eliminiert werden. Dies gelingt durch eine sogenannte Partitionierung der Spektren. Diese "spektrale Partitionierung" führt zu Spektren, welche nur noch die für das zu lösende Problem relevante Information beinhaltet. Mit Hilfe der multivariaten Datenanalyse kann dann anschließend die Information weiter verdichtet werden.

Im Schritt 23 wird auf Grund der Ergebnisse des Schrittes 22 zwei, derjenige Wellenlängenbereich ausgewählt, der am aussichtsreichsten sowohl die Rohstoffkenngrößen als auch die Prozeßkenngrößen beschreibt. Daraus läßt sich ein auf die Problemstellung adaptiertes Spektrometer konstruieren ("optische Partitionierung"), wobei zu beachten ist, daß die Meßtechnik auch äußere Einflüsse wie Feuchtigkeit oder "out of focus" Einstellungen möglich sind, was weiter unten mit dem Begriff der sog. "Flatteramplitude" verdeutlicht wird. Damit wird eine direkte Messung von Fasern oder Hackgut ohne weitere Probenvorbereitung möglich.

Als wesentliche Erkenntnis hat sich ergeben, daß die Prozeßvariablen "Druck", welcher der Sattdampftemperatur entspricht, und "Behandlungszeit" zweckmäßigerweise als sog. "Severity Factor" (= SFC) zusammengefaßt werden. Dieser Begriff ist in der Fachwelt bekannt und wird beispielsweise in Chemical Abstracts 129 (1998)-110264 im einzelnen definiert. Die praktische Bedeutung des SFC wird an anderer Stelle mit gleicher Anmeldepriorität im Zusammenhang mit der Herstellung von maßgeschneiderten Faserplatten beschrieben.

Als weitere Variable können die mechanischen Refinerparameter, wie Spalt, Drehzahl, Geometrie, und chemische Faktoren, wie zusätzliche Bindemittel oder die natürlichen inhärenten Klebstoffe, die aus dem Aufschluß ins Siebwasser gelangen, in das Modell integriert werden. Ziel ist jedoch immer, durch in sich geschlossene Kreisläufe und ohne Zugabe von weiteren Chemikalien ein ökologisch wertvolles technisches Endprodukt zu erzeugen. Mit Hilfe der aus der im einzelnen beschriebenen Vorgehensweise gewonnenen Kenngrößen lassen sich nun Fasermatten bzw. Faserplatten mit unterschiedlichem Eigenschaftsprofil herstellen.

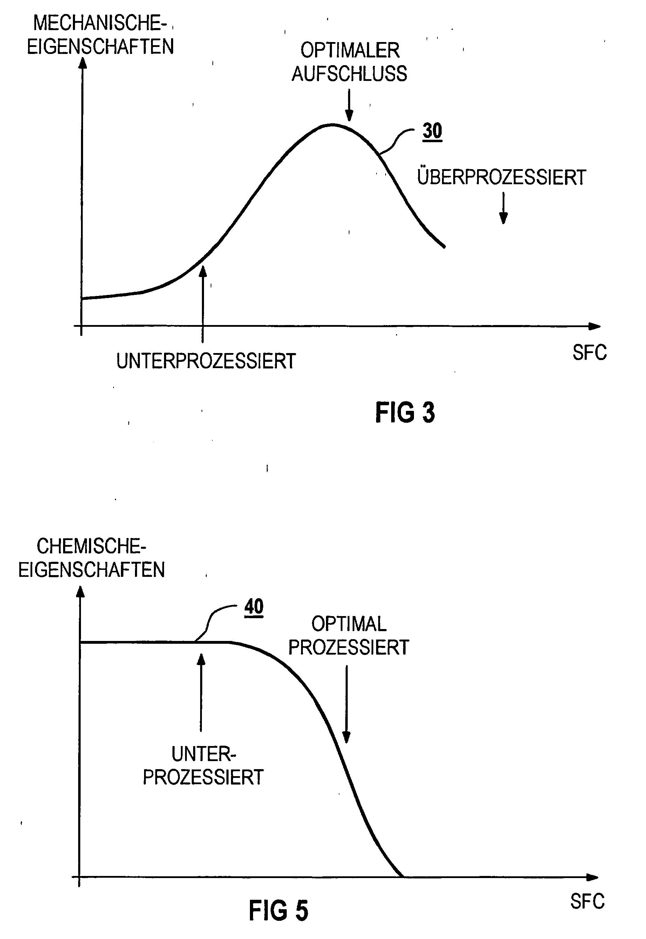

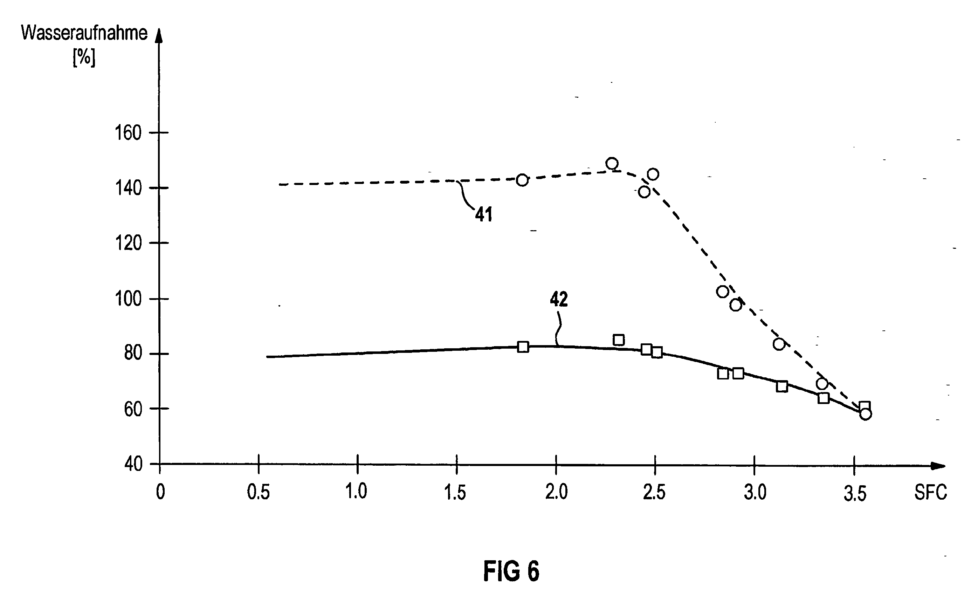

In Figur 3 sind die generellen mechanischen Eigenschaften der Produkte aus entsprechend prozessierten Refinerstoffen in Abhängigkeit vom SFC dargestellt. Es ergibt sich eine ,Glockenkurve' 30 der Eigenschaften als Funktion des SFC. Aufgrund grundsätzlicher Überlegungen ergibt sich, daß der Bereich des optimalen Aufschlusses im Bereich des Maximums der Glockenkurve 30 liegt. Entsprechendes ist in Figur 5 für die chemischen Eigenschaften dargestellt, wobei hier der Bereich des optimalen Aufschlusses in die abfallende Flanke der Kurve 40 fällt.

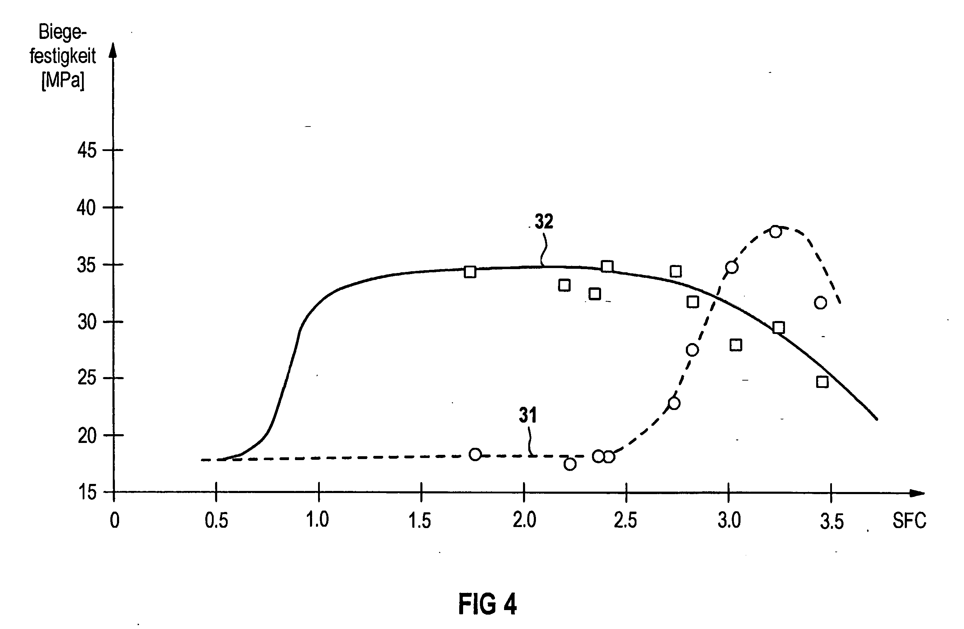

Die Figur 4 einerseits sowie die Figur 6 andererseits zeigen in Konkretisierung der Figuren 3 und 5 typische Eigenschaftsprofile 31 bzw. 41 für Hartholz, z.B. Buche ("beech") und 32 bzw. 42 für Weichholz, z.B. Fichte ("spruce"), in Abhängigkeit des Prozeßparameters SFC. Als Beispiele für die wichtigsten technologischen Eigenschaften können einerseits für die mechanischen Eigenschaften der Fasermatten bzw. Faserplatten die Biegefestigkeit entsprechend Figur 3 und 4 sowie andererseits für die chemischen Eigenschaften die Wasseraufnahme der Fasermatten bzw. Faserplatten entsprechend Figur 5 und 6 angegeben werden, da sie typische Profile zeigen und weitgehend repräsentativ für alle anderen Eigenschaften sind. Allerdings sind die jeweiligen Kurven je nach Holzsorte auf der Ordinate verschoben, so daß sich der optimale Aufschluß jeweils für unterschiedliche SFC ergibt.

Die Figuren 4 und 6 geben diesbezügliche experimentelle Ergebnisse wieder, mit denen die prinzipiellen Kurvenverläufe aus Figur 3 und Figur 5 bestätigt werden. Dabei wurden aus den Meßpunkten Kurven 31 und 32 sowie 41 und 42 interpoliert. Aus den Kurven 31 und 32 der Figur 4 sowie den Kurven 41 und 42 der Figur 6 kann man deutlich Bereiche mit zu geringem Aufschluß bzw. zu geringer Aktivierung, bei denen also die Fasererzeugung mit Holzaufschluß "unterprozessiert" ist oder aber Bereiche mit beginnender Degradation, d.h. "überprozessiert", ersehen. Man spricht im ersteren Fall von einer "Unterprozessierung" und im anderen Fall von einer "Überprozessierung". Ziel ist es, die geeignete Prozessierung zu erreichen.

Das Eigenschaftsprofil kann derart gestaltet werden, daß entweder sortenreines Holz prozessiert wird und danach die Fasern unterschiedlicher Hölzer bzw. Hölzer mit unterschiedlichem Aufschlußgrad gemischt werden, oder Rohholzmischungen gemeinsam prozessiert werden. In erster Näherung lassen sich die Eigenschaftsprofile der Faserplatten linear aus dem Eigenschaftsprofil der Fasern der unterschiedlichen Holzsorten kombinieren. Durch die Kombination der Eigenschaftsprofile der reinen Holzsorten sowie deren Fasermischungen lassen sich somit beliebige neue Hartfaserplatten mit in weiten Grenzen einstellbarem Eigenschaftsprofil erzeugen.

Als weitere Variable können die mechanischen Refinerparameter wie Spalt, Drehzahl, Geometrie des Refiners, die sich in Form der Morphologie der im Refiner hergestellten Fasern äußern, und chemische Faktoren wie zusätzliche Bindemittel oder auch die natürlichen inhärenten Klebstoffe, die aus dem Aufschluß ins Siebwasser gelangen, in das Modell integriert werden.

Die Figuren 5 und 6 zeigen typische Eigenschaftsprofile für Buche und Fichte als Beispiel für Hart- und Weichhölzer in Abhängigkeit des Prozeßparameters SFC. Daraus ergibt sich, wie der Parameter SFC - gegeben durch die Prozeßvariablen "Druck" entsprechend der Sattdampftemperatur und der Behandlungszeit - auf die entsprechenden Rohstoffe wirkt und welche Eigenschaften sich daraus ergeben. Als Beispiele für die wichtigsten technologischen Eigenschaften können insbesondere einerseits die Biegefestigkeit und andererseits die Wasseraufnahme der Faserplatten dargestellt, da sie typische Profile zeigen und weitgehend repräsentativ für alle anderen Eigenschaften sind.

Als Ergebnis der erfindungsgemäßen Vorgehensweise ergeben sich Eigenschaftsprofile gemäß Figur 5 und 6. Aus den Kurven 31 und 32 kann man deutlich Bereiche mit zu geringem Aufschluß bzw. zu geringer Aktivierung, bei denen also die Fasererzeugung mit Holzaufschluß "unterprozessiert" ist oder aber Bereiche mit beginnender Degradation, d.h. "überprozessiert", ersehen. Man spricht im ersteren Fall von einer "Unterprozessierung" und im anderen Fall von einer "Überprozessierung". Ziel ist, die geeignete Prozessierung zu erreichen.

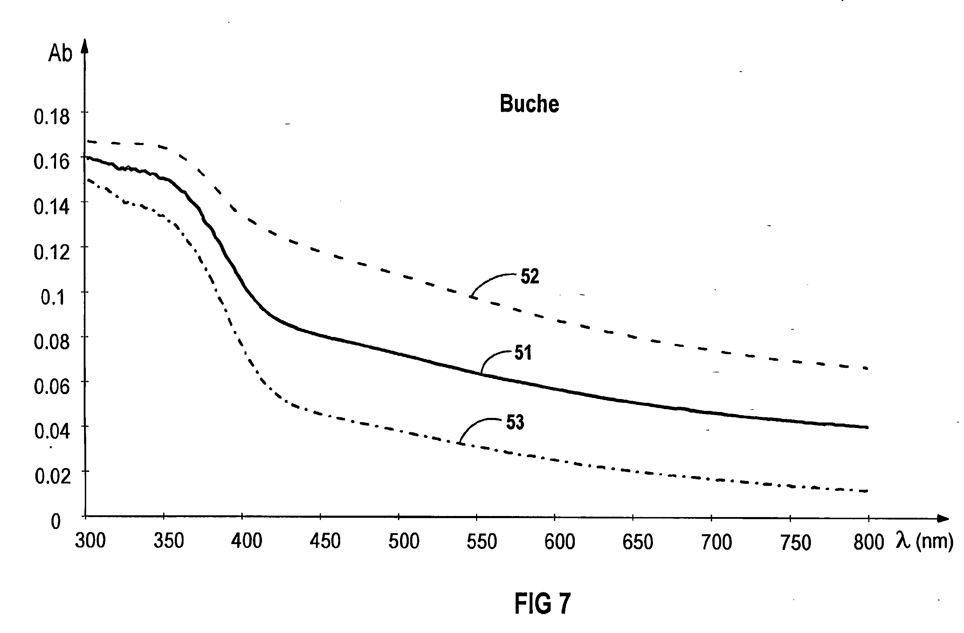

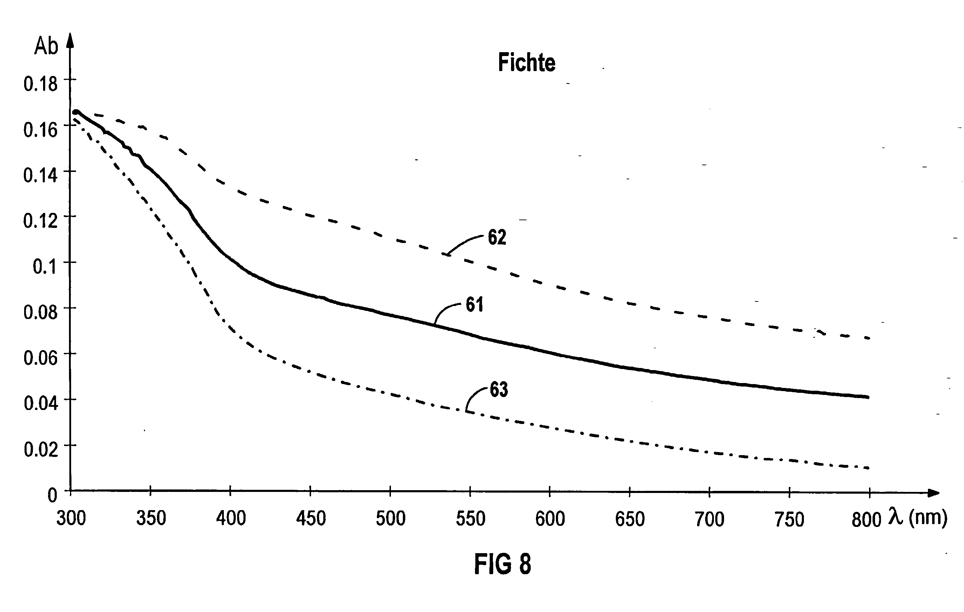

Die Figuren 7 und 8 zeigen UV/VIS-Spektren für Buche einerseits und Fichte andererseits als ausgewählte Rohstoffe für Fasermatten. Aus der Feinstruktur sind wesentliche Informationen entnehmbar. Die entsprechenden Spektren werden nun mit unterschiedlichen Methoden partitioniert: Als "physikalische Partitionierung" wird eine Aufteilung bezeichnet, bei der z.B. die durch physikalische Grundgesetze festgelegten Spektralbereiche ausgewählt werden. Beispiele hierfür sind der UV-Bereich mit Schwerpunkt auf die Messung der Streuung. Durch die Messung der Streueigenschaften können kleinere Teilchen, die die elektromagnetische Wellen stärker streuen von größeren Teilchen differenziert werden, so daß daraus Aussagen über den Mahlgrad gemacht werden können. Kürzere Wellen werden entsprechend den physikalischen Voraussetzungen stärker gestreut als längere. Zudem wird polarisiertes Licht durch die Streuung depolarisiert.

Letztere Effekte lassen sich sehr gut zur Bestimmung der Feinheit der Fasern nutzen, indem man im UV/VIS die Streuleistung mißt und/oder den prozentualen Anteil an der Zerstörung des polarisierten Lichtes durch Streuung bestimmt. Die chemische Zusammensetzung zeigt dagegen sich durch Absorption bestimmter Wellenlängen. So läßt sich die Farbveränderung, die durch den unterschiedlichen Aufschlußgrad zu sehen ist, insbesondere im VIS-Bereich detektieren. Bekannt sind die Untersuchungen im NIR oder IR. Insbesondere kann sehr selektiv im Infraroten(IR) die C=C-Schwingung Rückschlüsse auf den Gehalt an Lignin vermitteln.

Als "mathematische Partitionierung" wird eine Behandlung durch multivariate Verfahren, wie z.B. die Hauptkonponentenanalyse (PCA = Partial Component Analysis), bezeichnet. Diese Methoden sind beispielsweise in der eingangs erwähnten WO 95/31710 A1 ausgeführt und optimieren auf mathematisch beste Lösungen, nicht aber auf sinnvolle und interpretierbare Lösungen. Durch die Verwendung von Rotationsmethoden können jedoch auch reale Spektren optimiert werden.

Eine eigenständige Lösung wurde durch die Anwendung einer lokalen Regressionsmethode gefunden: PCA-transformierte Daten der Signalspektren und deren Ableitung, d.h. Differenzenquotient, werden auf ihren Informationsgehalt mit lokal linearen Abbildungen überprüft. Dabei werden die transformierten Daten einer bestimmten Intervalleinteilung als Eingaben für die lokal lineare Regression benutzt und eine Qualität, nämlich der Severity Faktor (SFC), oder eine andere zu modellierende Größe als Ausgabe berechnet. Aufgrund des Modellierungsergebnisses, z.B. als mittlerer quadratischer Fehler ermittelt, kann dann eine Aussage über den Informationsgehalt der ausgewählten Intervalleinteilung getroffen werden.

Letztere Erkenntnisse werden als Schlußfolgerungen in Spektrometern umgesetzt, die die erfindungsgemäßen optimalen Bereiche schwerpunktmäßig messen, was als "optische Partitionierung" bezeichnet wird. Es wurde festgestellt, daß überraschenderweise alle wesentlichen Parameter auch mit UV/VIS-Spektroskopie online gemessen werden können. Dies hat den wesentlichen Vorteil, daß in diesem Spektralbereich kostengünstig eine Vielzahl geeigneter Lichtquellen und Detektoren zur Verfügung stehen. Außerdem stört in diesem Bereich weder Wasser noch das Kohlendioxid der Luft wie im Falle des NIR oder IR. Eine Vorkonditionierung der Substrate ist daher nicht notwendig.

Wie eingangs beschrieben, muß bei einer Online-Anwendung der spektroskopischen Messung auch bei unterschiedlichen Oberflächenstrukturen, wie Fasern oder Hackschnitzel, immer dieselbe relevante Information erhalten werden. Dies ist nur möglich, wenn die Anordnung der Lichtquelle und des Detektors so gestaltet ist, daß unterschiedliche Anteile an diffus und gerichteter Reflexion ausgeglichen werden. Damit wird eine sog. Flatteramplitude möglich, so daß auch eine Bewegung des Substrates relativ zur optischen Anordnung unproblematisch ist.

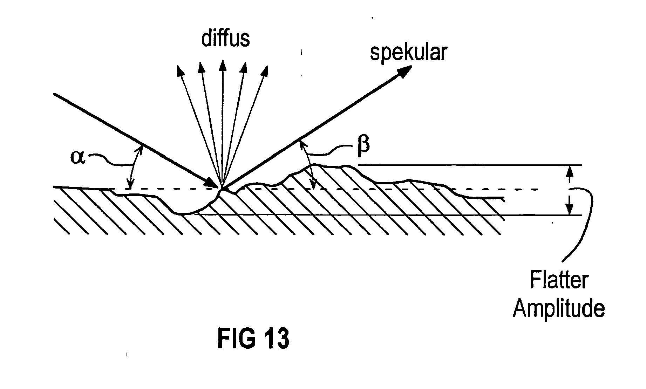

Es sind unterschiedliche Anordnungen möglich, mit denen eine definierte Flatteramplitude erhalten werden kann, was anhand Figur 13 noch beispielhaft beschrieben wird. Daran wird im einzelnen verdeutlicht, wie der diffus reflektierte Anteil vom gerichtet reflektierten Anteil separiert werden kann. Mit einem resultierenden Korrelationskoeffizienten für die Bestimmung ausgewählter Rohstoff- und Prozeßparameter und zugehörigen Beispielen für die Modellierung der Parameter und den genutzten Hauptkomponenten ergibt sich eine hinreichende Auswertung.

Bei den für die Untersuchungen verwendeten Spektrometern läßt sich eine spezifische Anordnung der Meßköpfe mit Vorgabe von Winkeln, Abständen, mit Erfassung der diffusen Reflexion und der gerichteten Reflexion erreichen. Solche Spektrometer können ein Filterspektrometer oder aber auch ein DiodenarraySpektrometer auf der Basis von Siliziumchips sein. Dabei kommen als Lichtquellen beispielsweise Halogenlampen in Frage, welche im einzelnen justierbar sind. Wesentlich ist, daß durch die simultane Erfassung der spekularen Reflexion einerseits und der diffusen Reflexion andererseits ermöglicht wird, auch bei unebenen und variierenden Oberflächen zu messen. Dies ist insbesondere bei Hackschnitzeln von Bedeutung, die als unregelmäßig ausgeformte Einzelteile dem Prozeß zugeführt werden, so daß Meßzone zur Generierung des Responsesignals ständig wechselnde Abstände hat.

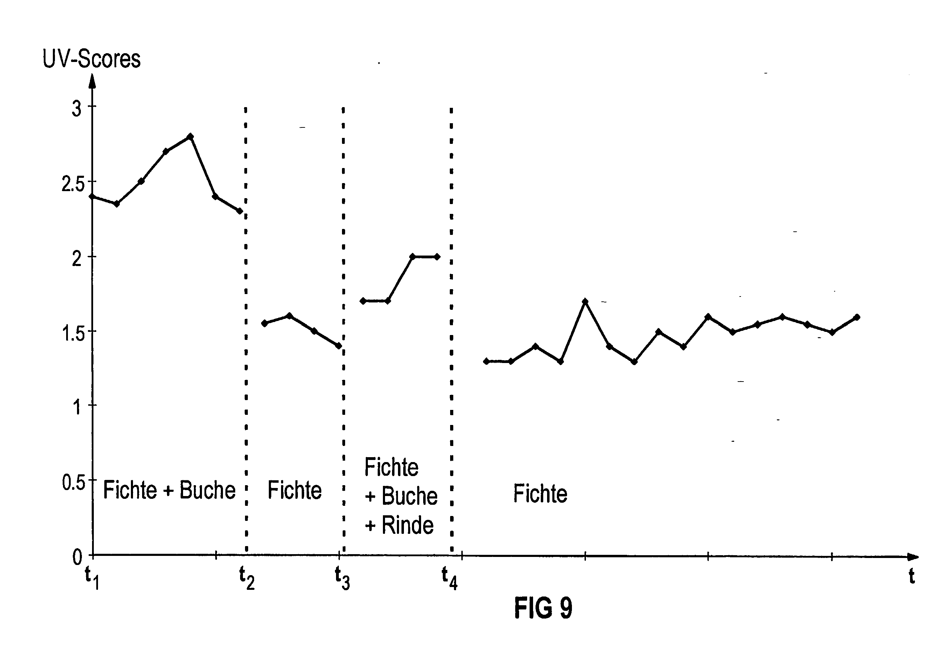

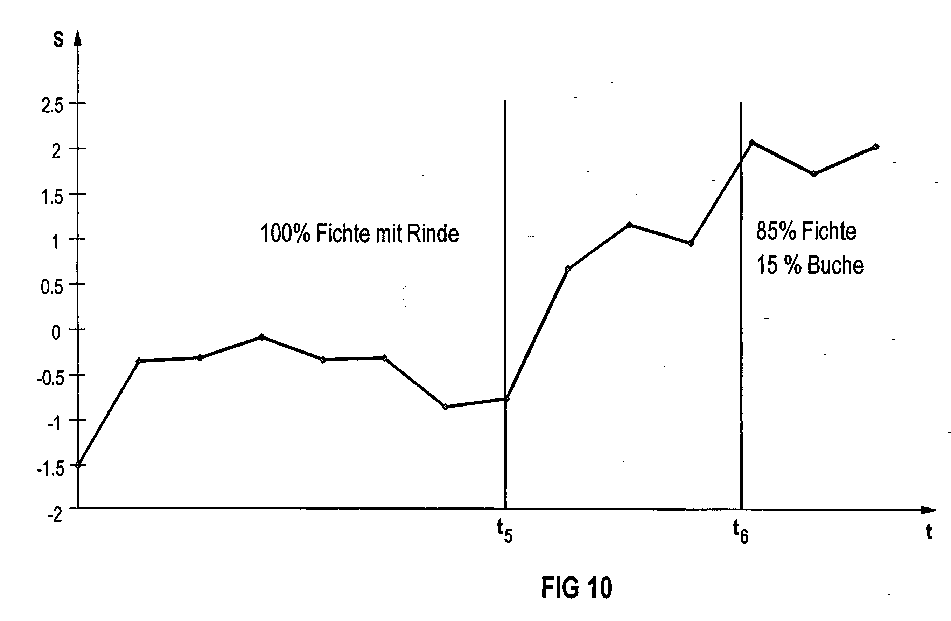

Im Rahmen von experimentellen Untersuchungen wurden Mischungen unterschiedlicher Hölzer prozessiert und die Produktion mit Hilfe des UV/VIS-Online-Spektrometers verfolgt. Die Produktionsline wurde nicht gesteuert, so daß Inhomogenitäten während der Produktion deutlich zu sehen sind. Figur 9 zeigt die Bestimmung des Holzes bzw. der Holzmischung im Produktionsverlauf. Der Fehler der Messung ist geringer als 2%, so daß die Variation ursächlich auf Inhomogenitäten während der Verarbeitung zurückzuführen ist. Figur 10 zeigt den zeitlichen Verlauf beim Übergang von einer Holzmischung zur anderen.

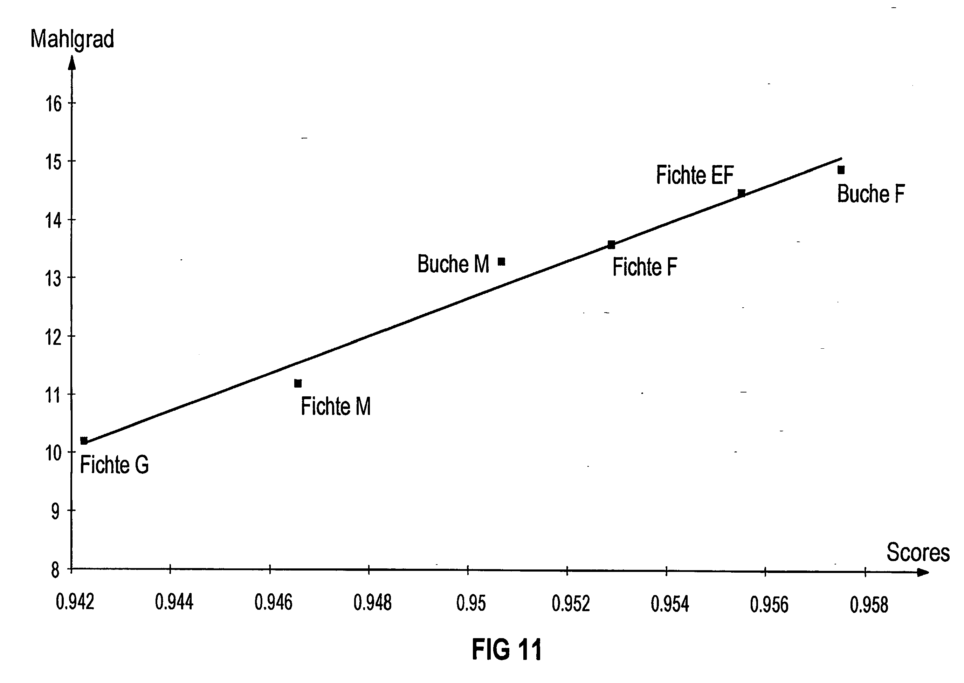

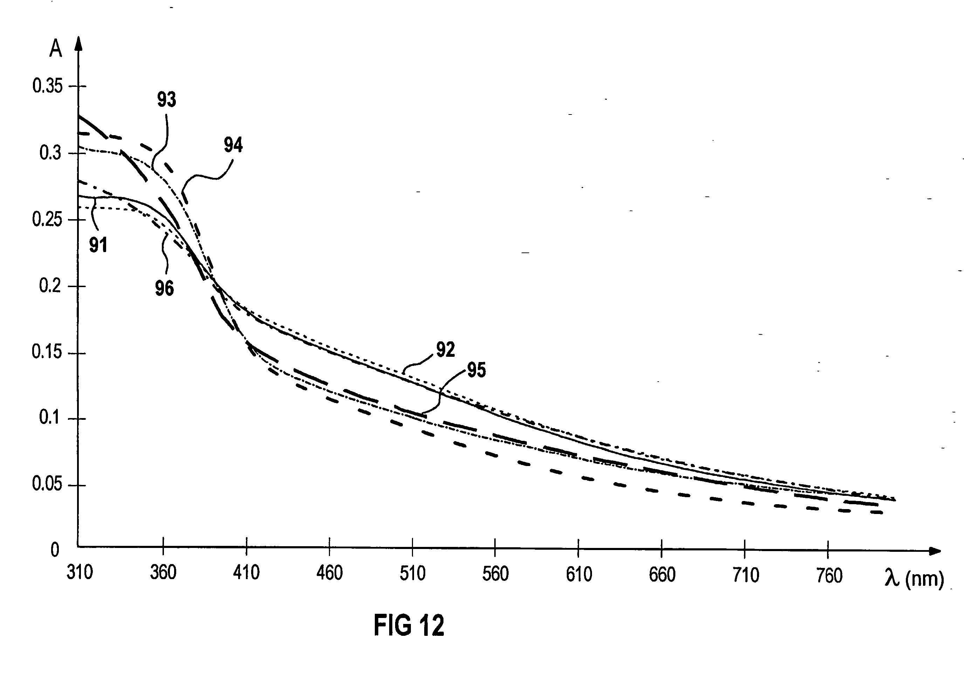

Bei den Versuchen wurden weiterhin unterschiedliche Holzsorten mit unterschiedlichen Aufschlußgraden hergestellt. Im Verlauf der Produktion wurde der SFC der prozessierten Fasern mit dem UV/VIS-on line Spektrometer gemessen. Es wurden Werte für "Fichte Grob", "Fichte Mittel", "Buche Mittel", "Fichte Fein", "Fichte Extrafein" und "Buche Fein" erhalten, die aufgrund ihrer Morphologie entsprechende Eigenschaften haben, und in Figur 11 als Funktion der Scores aufgetragen. Figur 11 zeigt den linearen Verlauf des Mahlgrades und Figur 12 die Absorptionsspektren 91 bis 96 der genannten Hölzer im UV/VIS-Bereich. (Es ist zu erkennen, daß der SFC über die Prozessierung verfolgt werden kann.) Varianzen zu Beginn und zum Ende der Versuchsreihen sind auf Inhomogenitäten beim Materialwechsel zurückzuführen und nicht auf Fehler in der Messung.

In gewissem Umfang sind bei der optimierten Herstellung von Faserplatten auch Informationen über den morphologischen Aufbau der Fasern notwendig. Bildanalytische Methoden geben einen detaillierten Überblick über die Faserverteilung mit Informationen über den Splitteranteil und Feinstanteil. Diese Technik ist informativ, aber aufwendig. Im praktischen Betrieb muß deshalb der Mahlgrad, der eine gewisse Aussage über die Feinheit der Fasern zuläßt, bekannt sein. Mit Hilfe der UV/VIS-Spektroskopie kann online der Mahlgrad bestimmt werden. Aufgrund der höheren Streuleistung feinerer Fasern in kurzwelligen Bereich können unterschiedliche Fasern diskriminiert werden. Aus Figur 11 und Figur 12 ist erkennbar, daß bei UV/VIS Spektren von Fasern unterschiedlicher Feinheit die Korrelation der UV-scores mit dem Mahlgrad erfüllt ist.

In Figur 13 ist verdeutlicht, daß bei Reflexion auf einer Oberfläche sowohl diffuses als auch spekulares Licht entsteht, und zwar auf der makroskopischen und auf der mikroskopischen Oberfläche. Beide Anteile beinhalten Teile von Informationen und werden je nach Einstrahl- und Beobachtungswinkel unterschiedlich gewichtet.

Eine unebene oder vibrierende Oberfläche, d.h. mit Flatteramplitude, erzeugt demzufolge eine abstandsabhängige Information, die durch geeignete Wahl von Einfalls- und Reflexionswinkel und in Verbindung mit chemometrischen Methoden kompensiert werden kann. Letzteres läßt sich auch für polarisiertes Licht, Messungen mit depolarisiertem Licht oder an anderen Geometrien, als in Figur 13 dargestellt ist, verdeutlichen.

## Patentansprüche

1. Verfahren zur Prozeßführung und Prozeßoptimierung bei der Herstellung von Fasermatten und/oder Faserplatten aus nachwachsenden, holzartigen und/oder lignozellulosischen Rohstoffen, wobei die Rohstoffe als Hackschnitzel aufbereitet und zu Matten geformt, und wobei die Matten getrocknet und/oder in einer Preßmaschine verpreßt werden, mit folgenden Verfahrensschritten:
- zur Ermittlung von für die Prozeßführung verwendbaren Kenngrößen werden optische Methoden herangezogen, wozu im laufenden Prozeß spektroskopische Messungen zur Ermittlung charakteristischer Spektren durchgeführt werden,
- aus den spektroskopischen Messungen werden die morphologischen und/oder chemischen Eigenschaften der im Prozeß verwendeten Stoffe ermittelt,
- daraus werden Steuer- und/oder Regelgrößen für die Prozeßführung abgeleitet,
**dadurch gekennzeichnet, dass**
- eine vorgeschaltete Partitionierung der Spektren durchgeführt wird, um die jeweils relevante Information aus den Spektren zu gewinnen, und dass
- zur Erfassung der Spektren im laufenden Prozeß mit variierenden Randbedingungen die spektroskopischen Messungen in unterschiedlichen Moden durch Messung von spekularer und diffuser Strahlung durchgeführt werden, so daß sich eine eindeutige Differenzierung der Meßgrößen ergibt.

2. Verfahren nach Anspruch 1, **dadurch gekennzeichnet, daß** am Rohstoff und an allen Zwischen- und Endprodukten der Verarbeitungskette - sowohl naß als auch trocken -, wie an Hackschnitzeln, an Refinerfasern, an den vorgeformten Fasermatten, an den gepreßten Faserplatten, am Prozeßwasser und/oder am Abwasser, gemessen wird.

3. Verfahren nach Anspruch 1, bei dem verschiedene Rohstoffe eingesetzt werden, die in einem Refiner bearbeitet werden,
**dadurch gekennzeichnet, daß** aus den spektroskopischen Messungen die Art und Mischung des Rohstoffes, der Mahlgrad des Refinerstoffes und die Intensität des Aufschlusses abgeleitet werden.

4. Verfahren nach Anspruch 1, **dadurch gekennzeichnet, daß** die spektroskopischen Messungen im Bereich zwischen 0,2 und 40 µm, insbesondere im Bereich von 200 bis 1200nm, durchgeführt werden.

5. Verfahren nach Anspruch 1, **dadurch gekennzeichnet, daß** eine spektrale Partitionierung erfolgt.

6. Verfahren nach Anspruch 1, **dadurch gekennzeichnet, daß** eine mathematische Partitionierung erfolgt.

7. Verfahren nach Anspruch 1, **dadurch gekennzeichnet, daß** in Reflexion gemessen wird, wobei eine Überlagerung von spekularer und diffuser Reflexion erfolgt.

8. Verfahren nach Anspruch 1, **dadurch gekennzeichnet, daß** bei nicht reproduzierbaren unregelmäßigen oder in Bewegung befindlichen Oberflächen eine Flatteramplitude derart gemessen wird, daß eine reproduzierbare Differenzierung von diffuser und spekularer Reflexion mit variabler Amplitude erfolgt.

9. Verfahren nach einem der vorhergehenden Ansprüche, **dadurch gekennzeichnet, daß** zur Auswertung der Spektren eine multivariate Datenanalyse mit Verdichtung der aus den Spektren erhältlichen Informationen vorgenommen wird.

10. Verfahren nach einem der vorhergehenden Ansprüche, **dadurch gekennzeichnet, daß** zur Ermittlung der charakteristischen Spektren wenigstens ein Spektrometer eingesetzt wird.

11. Verfahren nach Anspruch 10, **dadurch gekennzeichnet, daß** ein optisch partitioniertes Spektrometer verwendet wird.

12. Verfahren nach Anspruch 10, **dadurch** gekennnzeichnet, daß das Spektrometer ein Filterspektrometer ist.

13. Verfahren nach Anspruch 10, **dadurch gekennzeichnet, daß** das Spektrometer ein Diodenarray-Spektrometer auf der Basis von Si-Chips ist.

14. Verfahren nach Anspruch 10, **dadurch gekennzeichnet, daß** als Lichtquelle für das Spektrometer eine Halogenlampe verwendet wird.

## Claims

1. Method for controlling and optimizing a process in the production of fibre mats and/or fibre boards made from renewable, wood-like and/or lignocellulosic raw materials, in which the raw materials are conditioned as wood chips and formed into mats, and in which the mats are dried and/or pressed in a pressing machine, comprising the following method steps:
- optical methods are used for determining characteristic values which can be used for the control of the process, for which spectroscopic measurements are carried out during the running process in order to determine characteristic spectra,
- the morphological and/or chemical properties of the materials used in the process are determined from the spectroscopic measurements,
- control values and/or controlled values for controlling the process are derived therefrom,
**characterized in that**
- an upstream partitioning of the spectra is carried out in order to obtain the respective relevant information from the spectra, and **in that**
- for recording the spectra during the running process having varying boundary conditions, the spectroscopic measurements are carried out in different modes by measuring specular and diffuse radiation, so that an unambiguous differentiation of the measured values results therefrom.

2. Method according to Claim 1, **characterized in that** measurements are made on the raw material and on all intermediate and end products of the process chain - both wet and dry - such as on wood chips, on refiner fibres, on the preformed fibre mats, on the pressed fibre boards, on the processing water and/or on the wastewater.

3. Method according to Claim 1, in which different raw materials are used, which are processed in a refiner, **characterized in that** the type and mixture of the raw material, the fineness of the refiner material and the intensity of the digestion are derived from the spectroscopic measurements.

4. Method according to Claim 1, **characterized in that** the spectroscopic measurements are carried out in the range between 0.2 and 40 µm, preferably in the range of from 200 to 1200 nm.

5. Method according to Claim 1, **characterized in that** a spectral partitioning takes place.

6. Method according to Claim 1, **characterized in that** a mathematical partitioning takes place.

7. Method according to Claim 1, **characterized in that** the measurements are carried out in reflection, with specular and diffuse reflection being superimposed.

8. Method according to Claim 1, **characterized in that**, in the case of non-reproducible irregular or moving surfaces, a flatter amplitude is measured in such a way that a reproducible differentiation of diffuse and specular reflection with variable amplitude takes place.

9. Method according to one of the preceding claims, **characterized in that** for evaluating the spectra, a multivariate data analysis with condensation of the information obtainable from the spectra is carried out.

10. Method according to one of the preceding claims, **characterized in that** at least one spectrometer is used to determine the characteristic spectra.

11. Method according to Claim 10, **characterized in that** an optically partitioned spectrometer is used.

12. Method according to Claim 10, **characterized in that** the spectrometer is a filter spectrometer.

13. Method according to Claim 10, **characterized in that** the spectrometer is a diode array spectrometer on the basis of Si chips.

14. Method according to Claim 10, **characterized in that** a halogen lamp is used as light source for the spectrometer.

## Revendications

1. Procédé pour conduire et optimiser un processus dans la fabrication de nappes de fibres et/ou de panneaux de fibres en matière première se régénérant ligneuse et/ou lignocellulosique, la matière première étant préparée sous forme de copeaux et transformée en nappe et les nappes étant séchées et/ou comprimées dans une presse, comprenant des stades de procédé suivants :
- pour la détermination de grandeurs caractéristiques pouvant être utilisées dans la conduite du processus, on tire partie de méthodes optiques en effectuant à cet effet, alors que le processus se déroule, des mesures spectroscopiques de détermination de spectres caractéristiques,
- à partir des mesures spectroscopiques on détermine les propriétés morphologiques et/ou chimiques des substances utilisées dans le processus,
- on en déduit des grandeurs de commande et/ou de régulation pour mener le processus,
**caractérisé en ce que**
- on effectue un partitionnement en amont des spectres pour obtenir l'information respectivement pertinente à partir des spectres et **en ce que**
- pour la détermination des spectres, alors que le processus se déroule avec des conditions aux limites qui varient, on effectue les mesures spectroscopiques suivant des modes différents par mesures de rayonnement spéculaires et de rayonnement diffus, de manière à obtenir une différenciation sans équivoque des grandeurs de mesure.

2. Procédé suivant la revendication 1, **caractérisé en ce que** l'on effectue des mesures sur la matière première et sur tous les produits intermédiaires et finaux de la chaîne de traitement tant humides que secs comme sur des copeaux, des fibres raffinées, les nappes de fibres préformées, des nappes de fibres pressées, sur l'eau de processus et/ou sur l'eau résiduaire.

3. Procédé suivant la revendication 1, dans lequel on utilise diverses matières premières qui sont traitées dans un raffinage, **caractérisé en ce que** l'on déduit des mesures spectroscopiques, la nature et le mélange de la matière première, le degré de broyage de la substance de raffinage et l'intensité de la délignification.

4. Procédé suivant la revendication 1, **caractérisé en ce que** l'on effectue les mesures spectroscopiques dans le domaine compris entre 0,2 et 40 µm, notamment dans le domaine de 200 à 1200 nm.

5. Procédé suivant la revendication 1, **caractérisé en ce que** l'on effectue une partition spectrale.

6. Procédé suivant la revendication 1, **caractérisé en ce que** l'on effectue une partition mathématique.

7. Procédé suivant la revendication 1, **caractérisé en ce que** l'on effectue des mesures en réflexion en effectuant une superposition de réflexion spéculaire et diffuse.

8. Procédé suivant la revendication 1, **caractérisé en ce que** pour des surfaces irrégulières non reproductibles ou se trouvant en mouvement on effectue une mesure de l'amplitude de la planéité en effectuant une différenciation reproductible de réflexion diffuse et spéculaire d'amplitude variable.

9. Procédé suivant l'une des revendications précédentes, **caractérisé en ce que** pour évaluer les spectres on effectue une analyse de données à variable multiple avec compression des informations que l'on peut obtenir à partir des spectres.

10. Procédé suivant l'une des revendications précédentes, **caractérisé en ce que** pour déterminer les spectres caractéristiques, on utilise au moins un spectromètre.

11. Procédé suivant la revendication 10, **caractérisé en ce que** l'on utilise un spectromètre à partition du point de vue optique.

12. Procédé suivant la revendication 10, **caractérisé en ce** le spectromètre est un spectromètre à filtre.

13. Procédé suivant la revendication 10, **caractérisé en ce** le spectromètre est un spectromètre à réseau de diode à base de puces en Si.

14. Procédé suivant la revendication 10, **caractérisé en ce que** l'on utilise une lampe aux halogènes comme source de lumière pour le spectromètre.
